# EUROPEAN PATENT SPECIFICATION

(11) **EP 3 884 763 B1**
(45) Date of publication and mention of the grant of the patent: **26.11.2025**
(21) Application number: 20210503.7
(22) Date of filing: 29.11.2020
(51) Int. Cl.: A01D 43/063, A01D 43/07

(54) **SUPPORT CART**
BODENUNTERSTÜTZUNGSWAGEN
TIMON DE SUPPORT

(30) Priority: 24.03.2020 JP 2020052470
(43) Date of publication of application: 29.09.2021
(73) Proprietor: Kubota Corporation, Osaka-shi, Osaka 556-8601 (JP)
(72) Inventor: IWATA, Hideki, SAKAI-SHI, OSAKA, 5900823 (JP); AKAI, Yuto, SAKAI-SHI, OSAKA, 5900823 (JP); SHIBATA, Takashi, SAKAI-SHI, OSAKA, 5900823 (JP); SATO, Seiya, SAKAI-SHI, OSAKA, 5900823 (JP); AKITA, Masayuki, SAKAI-SHI, OSAKA, 5900823 (JP); HIRAI, Ryota, SAKAI-SHI, OSAKA, 5900823 (JP); SASAGAWA, Sho, SAKAI-SHI, OSAKA, 5900823 (JP); MATSUMOTO, Ryo, SAKAI-SHI, OSAKA, 5900823 (JP); NISHIHARA, Hironobu, SAKAI-SHI, OSAKA, 5900823 (JP); TONOYA, Yoshihisa, SAKAI-SHI, OSAKA, 5900823 (JP)
(74) Representative: Cabinet Beau de Loménie

(56) References cited:
- EP-A1- 2 559 333
- EP-A2- 3 598 887
- JP-A- 2013 000 105

## Description

### Technical Field

The present invention relates to a support cart for a riding type mower.

### Background Art

A riding type mower (see EP 2 559 333) may include a vehicle body, a mowing apparatus provided for the vehicle body, a support section at a back portion of the vehicle body, and a grass collecting apparatus configured to be detachably supported by the support section. A riding type mower of this type may include a grass collecting apparatus including a connection section configured to be detachably connected to the support section, a grass collecting container configured to receive grass mown by the mowing apparatus and store the grass, and a lifting-lowering link mechanism extending backward from the connection section in such a manner as to be capable of being swung in the up-down direction and supporting the grass collecting container in such a manner as to be capable of (i) lifting and lowering the grass collecting container and (ii) changing the orientation of the grass collecting container between a grass collecting orientation and a discharge orientation. Such a riding type mower is configured such that attaching and detaching the connection section to and from the support section allows the grass collecting apparatus to be attached to and detached from the vehicle body. The grass collecting apparatus to be attached to the vehicle body or having been detached from the vehicle body can be placed on a support cart for facilitated movement.

An example riding type mower of the above type is disclosed in Patent Literature 1 (Japanese Unexamined Patent Application Publication, Tokukai, No. 2013-39094). The riding type mower disclosed in Patent Literature 1 is an autonomous vehicle including (i) a mowing apparatus connected to a portion of the vehicle body frame which portion is between the front wheels and the rear wheels, (ii) a grass collecting container configured to store mown grass, and (iii) a pair of upper and lower link mechanisms extending from the vehicle body frame to the left and right sides of the grass collecting container in such a manner as to be capable of being lifted and lowered. The grass collecting container is supported by the pair of upper and lower link mechanisms via links for lifting and lowering the grass collecting container and opening and closing a discharge port as well as a rotary shaft. The grass collecting container is thus capable of being lifted and lowered as well as dumping mown grass stored therein. The vehicle body frame is provided with a connection element detachably connected thereto, which supports the pair of upper and lower link mechanisms. Patent Literature 1 discloses a carrier as a support cart.

### Summary of Invention

### Technical Problem

Suppose that since the lifting-lowering link mechanism connected to the connection section can be moved relative to the grass collecting container, the connection section is misplaced relative to that portion of the support section to which the connection section is to be connected, and that the connection section thus needs to be adjusted in position relative to the support section. In such cases, connecting the connection section to the support section requires adjusting the connection section in position while supporting the link mechanism at the same time. This takes a lot of effort and labor. A similar point can be raised about detachment of the grass collecting apparatus from the vehicle body.

The present invention provides a riding type mower including a support cart configured to facilitate attachment and detachment of a grass collecting apparatus to and from a vehicle body of the riding type mower. The invention also provides such a support cart.

### Solution to Problem

A riding type mower of the present invention is defined in claim 1.

While the grass collecting apparatus is on the placement section, the above arrangement allows (i) the lifting-lowering link mechanism to be propped by the strut pole and (ii) the strut pole to be adjusted for extension and contraction with use of the extension and contraction adjusting portion. This allows the connection section of the grass collecting apparatus on the support cart to be adjusted to and kept at the same height as that portion of the support section for the vehicle body to which the connection section is to be connected. Thus, when the grass collecting apparatus is to be connected to the vehicle body, simply bringing the grass collecting apparatus closer to the vehicle body by moving the support cart allows the connection section to meet that portion of the support section to which the connection section is to be connected. The above arrangement thereby conveniently eliminates the need to take particular effort for positioning the connection section with respect to the support section in connecting the connection section to the support section. When the grass collecting apparatus is to be detached from the vehicle body, the above arrangement allows the lifting-lowering link mechanism to be propped by the strut pole similarly to when the grass collecting apparatus is to be connected. The above arrangement thereby conveniently eliminates the need to take particular effort for supporting the lifting-lowering link mechanism in disconnecting the connection section from the support section.

The present invention may preferably be arranged such that the lifting-lowering link mechanism includes an upper link and a lower link, the connection section is provided with (i) an upper support section connected to the connection section and pivotally supporting a front end of the upper link and (ii) a lower support section connected to the connection section and pivotally supporting a front end of the lower link, and the strut pole is connected only to the lower link of the upper link and the lower link.

The above arrangement allows the connection section to connect the respective front ends of the upper link and the lower link to each other. Thus, even if the strut pole is connected only to the lower link but not to the upper link, the upper link can be propped by the strut pole via the connection section and the lower link. This allows the strut pole to be short, thereby facilitating the attachment and detachment of the grass collecting apparatus.

The present invention may preferably be arranged such that the extension and contraction adjusting portion includes a turnbuckle.

With the above arrangement, when the length of the strut pole is to be adjusted while the strut pole is connected to the lifting-lowering link mechanism, the turnbuckle produces a jack function based on its screw threads, thereby facilitating the length adjustment.

The present invention may preferably further include: a lock member configured to be switched between (i) a locked state, in which the lock member fixes the grass collecting apparatus on the placement section to the base section, and (ii) a released state, in which the lock member does not fix the grass collecting apparatus to the base section, wherein the lock member is supported by the base section in such a manner as to be capable of being slid between the locked state and the released state.

With the above arrangement, simply sliding the lock member conveniently allows the grass collecting apparatus to be fixed to and released from the base section.

The present invention may preferably be arranged such that the strut pole is configured to be switched into a storage orientation, in which the strut pole is inclined flat in comparison to the strut orientation, and the lock member includes a holding portion configured to hook a tip-side portion of the strut pole in the storage orientation to hold the strut pole in the storage orientation.

The above arrangement allows the lock member to double as a holding member configured to hold the strut pole in the storage orientation, and thereby inexpensively allows the strut pole to be reliably kept in the storage orientation.

### Brief Description of Drawings

Fig. 1 is a perspective view of a support cart in its entirety.
Fig. 2 is a front view of a lock mechanism in the locked state.
Fig. 3 is a front view of a lock mechanism in the released state.
Fig. 4 is a side view of a strut pole in the stored state.
Fig. 5 is a left side view of a riding type mower in its entirety.
Fig. 6 is a plan view of a riding type mower in its entirety.
Fig. 7 is a side view of a grass collecting container in the discharge orientation.
Fig. 8 is a side view of a connection portion.
Fig. 9 is a cross-sectional view of a connection portion.
Fig. 10 is a front view of an operation valve device.
Fig. 11 is a front view of a beta pin in the stored state.
Fig. 12 is a diagram illustrating how a grass collecting apparatus is attached.
Fig. 13 is a diagram illustrating how a grass collecting apparatus is attached.

### Description of Embodiments

The description below deals with an example embodiment of the present invention with reference to drawings.

A support cart is used for a riding type mower to which a grass collecting apparatus is attachable and from which it is detachable, and helps the attachment and detachment of the grass collecting apparatus.

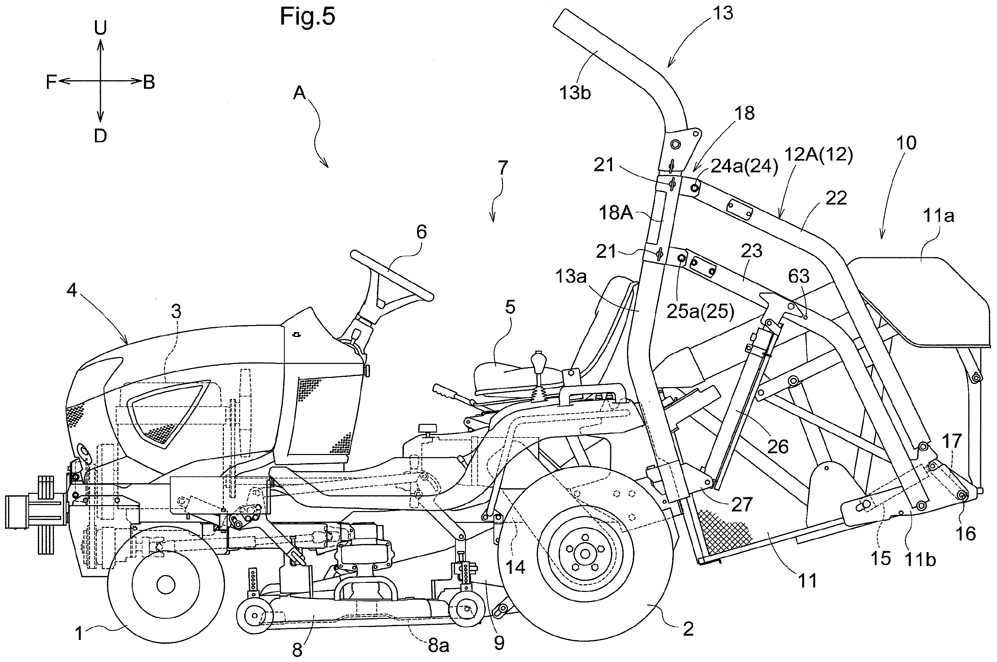

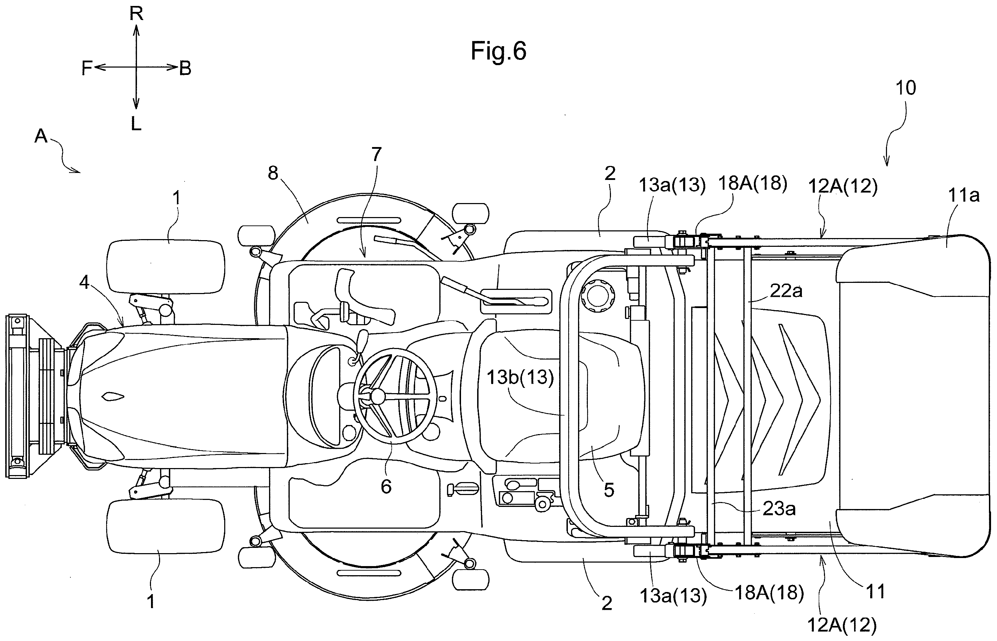

In the description below of the vehicle body of a riding type mower, arrow F shown in Figs. 5 and 6 indicates the forward direction of the vehicle body, arrow B shown in Figs. 5 and 6 indicates the backward direction of the vehicle body, arrow U shown in Fig. 5 indicates the upward direction of the vehicle body, arrow D shown in Fig. 5 indicates the downward direction of the vehicle body, arrow L shown in Fig. 6 indicates the leftward direction of the vehicle body, and arrow R shown in Fig. 6 indicates the rightward direction of the vehicle body.

### [Overall Configuration of Riding Type Mower]

Figs. 5 and 6 each illustrate a riding type mower A including (i) a vehicle body, (ii) a pair of left and right front wheels 1 provided for the vehicle body and configured to allow the riding type mower A to be steered, and (iii) a pair of left and right drivable rear wheels 2 provided for the vehicle body. The riding type mower A further includes, at a front portion of the vehicle body, a motor section 4 containing an engine 3 configured to produce power to be transmitted to the rear wheels 2. The riding type mower A further includes, at a back portion of the vehicle body, a driver section 7 configured to accommodate a driver and containing a driver's seat 5 and a steering wheel 6 configured to operate the front wheels 1 to steer the riding type mower A. The riding type mower A is provided with a mowing apparatus 8 between the front wheels 1 and the rear wheels 2 which mowing apparatus 8 is configured to reap grass or turf. The mowing apparatus 8 is driven by power transmitted from the engine 3. The riding type mower A is provided with, at a back portion of the vehicle body, a grass collecting apparatus 10 supported by the rear portion and including a grass collecting container 11. The riding type mower A is also provided with a conveyor duct 9 extending from the mowing apparatus 8 to the grass collecting container 11 and configured to convey grass or turf mown by the mowing apparatus 8 (hereinafter referred to collectively as "mown grass") to the grass collecting container 11. The conveyor duct 9 allows mown grass to be conveyed by a wind caused by rotation of a cutting blade 8a of the mowing apparatus 8. The conveyor duct 9 extends under the vehicle body in its front-back direction through a space between the left and right rear wheels 2.

### [Configuration of Grass Collecting Apparatus]

The grass collecting apparatus 10 is, as illustrated in Figs. 5 and 6, provided with a grass collecting container 11 and a lifting-lowering link mechanism 12 allowing the grass collecting container 11 to be supported by the vehicle body.

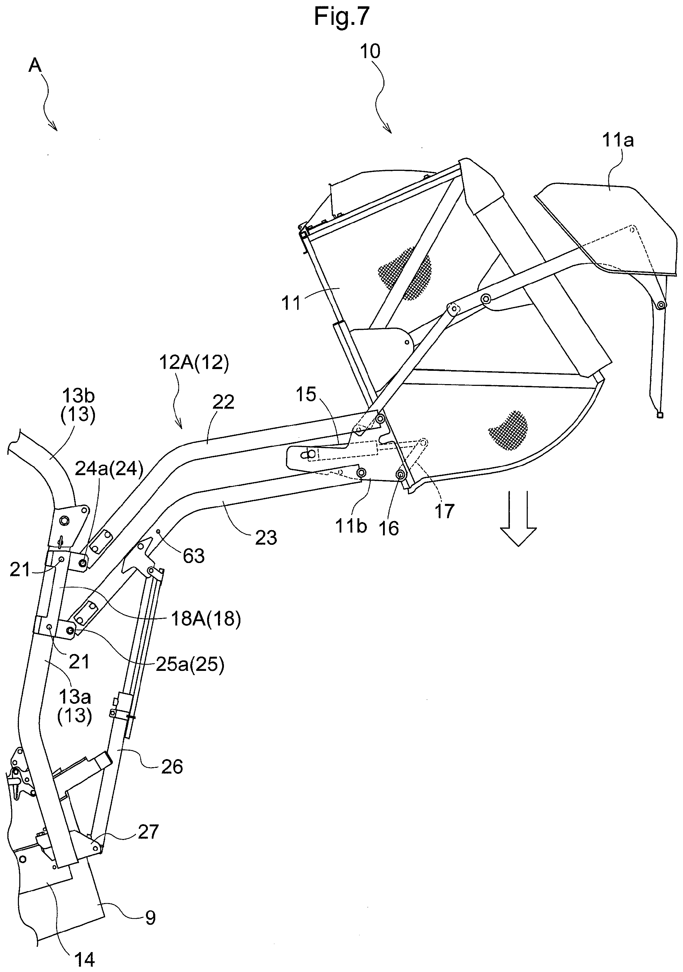

The lifting-lowering link mechanism 12 extends backward from a support frame 13 (support section), which is present at a back portion of the vehicle body, in such a manner as to be capable of being swung in the up-down direction. The lifting-lowering link mechanism 12 has an extension end connected to a lower back portion of the grass collecting container 11 in such a manner that the grass collecting container 11 is capable of being swung relative to the lifting-lowering link mechanism 12. The support frame 13 stands on respective back portions of left and right vehicle body frames 14 to function as a ROPS (Rollover Protection Structure). The support frame 13 includes a pair of left and right supportive column portions 13a and a connection portion 13b connecting respective upper portions of the left and right supportive column portions 13a to each other. The grass collecting container 11 is capable of, as a result of a swing of the lifting-lowering link mechanism 12, being lowered to a collection position, which is a lower position relative to the vehicle body as illustrated in Fig. 5, and lifted to a discharge position, which is an upper position relative to the vehicle body as illustrated in Fig. 7. As illustrated in Fig. 5, the grass collecting container 11 is, when at the collection position, (i) operated with use of a pair of left and right dump cylinders 15 to have a grass collecting orientation, in which the grass collecting container 11 collects and stores mown grass from the mowing apparatus 8, and (ii) supported by the lifting-lowering link mechanism 12 while keeping the grass collecting orientation. As illustrated in Fig. 7, the grass collecting container 11 is, when at the discharge position, (i) operated with use of the pair of left and right dump cylinders 15 to have a discharge orientation, in which the grass collecting container 11 is inclined with a back portion lowered to discharge mown grass stored therein, and (ii) supported by the lifting-lowering link mechanism 12 while keeping the discharge orientation. When the grass collecting container 11 has been swung to have a discharge orientation, the dump cylinders 15 are operated to open the lid 11a, so that the grass collecting container 11 has an open discharge port. The left and right dump cylinders 15 are, as illustrated in Figs. 5 and 7, respectively connected in an interlocking manner to operation arms 17 extending respectively from the left and right ends of a rotary shaft 16 of the grass collecting container 11. Swinging the operation arms 17 to rotate the rotary shaft 16 changes how the grass collecting container 11 is oriented.

Specifically, as illustrated in Fig. 5, the lifting-lowering link mechanism 12 has a front end provided with a connection section 18, which becomes detachably connected to the support frame 13 so that the lifting-lowering link mechanism 12 becomes detachably supported by the support frame 13. As the front end of the lifting-lowering link mechanism 12 is connected to the connection section 18 in such a manner as to be capable of being swung in the up-down direction, the lifting-lowering link mechanism 12 is supported by the support frame 13 in such a manner as to be capable of being swung in the up-down direction.

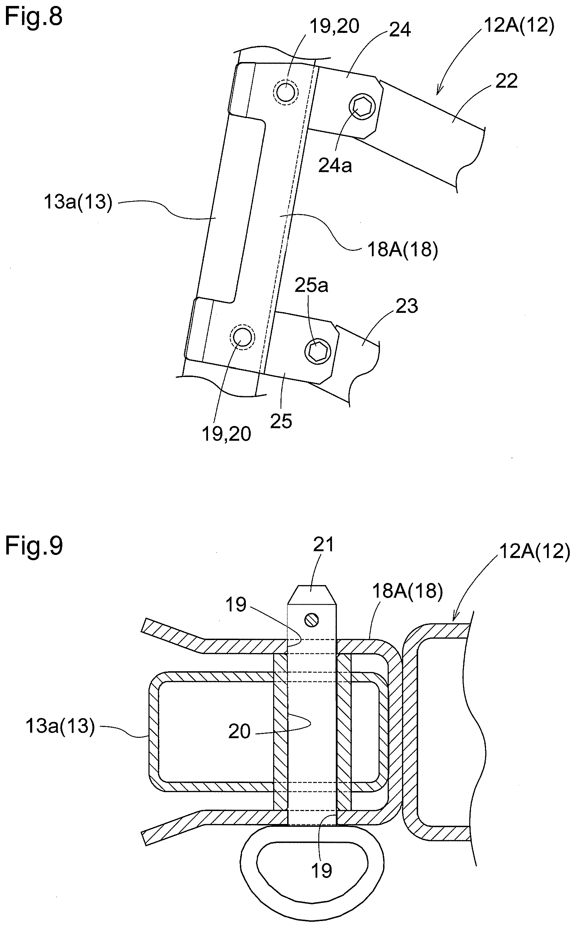

As illustrated in Figs. 5 and 6, the connection section 18 includes (i) a left connection portion 18A detachably connected to the left supportive column portion 13a of the support frame 13 and (ii) a right connection portion 18A detachably connected to the right supportive column portion 13a of the support frame 13. The left and right connection portions 18A are, as illustrated in Figs. 8 and 9, each shaped to form a groove and thereby cover the corresponding supportive column portion 13a from backward. The connection portions 18A each have left and right connection sides each of which has two connection holes 19, one of which is present at an upper portion of the connection side, and the other of which is present at a lower portion of the connection side. The left and right connection portions 18A are each detachably connected to the corresponding supportive column portion 13a with two connection pins 21 each detachably inserted through (i) one of the upper and lower connection holes 19 in the connection portion 18A and (ii) a corresponding connection hole 20 in the supportive column portion 13a.

The lifting-lowering link mechanism 12, as illustrated in Figs. 5 and 6, includes a pair of left and right link mechanism portions 12A present on the opposite lateral sides of the grass collecting container 11. The left link mechanism portion 12A includes an upper link 22 and a lower link 23 each extending backward from the left connection portion 18A in such a manner as to be capable of being swung in the up-down direction. The right link mechanism portion 12A includes an upper link 22 and a lower link 23 each extending backward from the right connection portion 18A in such a manner as to be capable of being swung in the up-down direction. The upper links 22 and the lower links 23 have respective back ends connected to a link connection portion 11b at a lower back portion of the grass collecting container 11 in such a manner that the grass collecting container 11 is capable of being swung relative to the upper links 22 and the lower links 23.

As illustrated in Fig. 7, the left and right connection portions 18A each have an upper portion provided with an upper support section 24, which pivotally supports a front end of the corresponding upper link 22 via a pivot shaft 24a. The left and right connection portions 18A each have a lower portion provided with a lower support section 25, which pivotally supports a front end of the corresponding lower link 23 via a pivot shaft 25a. The left and right connection portions 18A are each provided with the corresponding upper support section 24 and lower support section 25 connected thereto. The left and right connection portions 18A are each a connection member supporting the respective front ends of the corresponding upper link 22 and lower link 23 in such a manner that the front ends are separated from each other by a predetermined distance.

The connection section 18, as illustrated in Figs. 5 and 9, becomes connected to a connection portion connecting position on the support frame 13 as a result of the left and right connection portions 18A each becoming connected to the corresponding supportive column portion 13a with use of two connection pins 21. Detaching the left and right connection portions 18A from the respective supportive column portions 13a detaches the connection section 18 from the support frame 13. Connecting the connection section 18 to the support frame 13 allows the lifting-lowering link mechanism 12 to be supported by the support frame 13 in such a manner as to be capable of being swung in the up-down direction. Detaching the connection section 18 from the support frame 13 detaches the lifting-lowering link mechanism 12 from the support frame 13.

As illustrated in Fig. 5, the grass collecting apparatus 10 includes a left lifting-lowering cylinder 26 that is connected to (i) an intermediate portion of the lower link 23 of the left link mechanism portion 12A and (ii) a lower portion of the left supportive column portion 13a of the support frame 13 and that is configured to lift and lower the left link mechanism portion 12A. The grass collecting apparatus 10 also includes a right lifting-lowering cylinder 26 that is connected to (i) an intermediate portion of the lower link 23 of the right link mechanism portion 12A and (ii) a lower portion of the right supportive column portion 13a of the support frame 13 and that is configured to lift and lower the right link mechanism portion 12A. The lifting-lowering link mechanism 12 can be lifted and lowered as a result of (i) the left link mechanism portion 12A being lifted and lowered through extension and contraction of the left lifting-lowering cylinder 26 and (ii) the right link mechanism portion 12A being lifted and lowered through extension and contraction of the right lifting-lowering cylinder 26. The left and right lifting-lowering cylinders 26 each have a lower portion detachably supported by a cylinder supporting section 27 provided for the corresponding supportive column portion 13a.

### [Operation Valve Device]

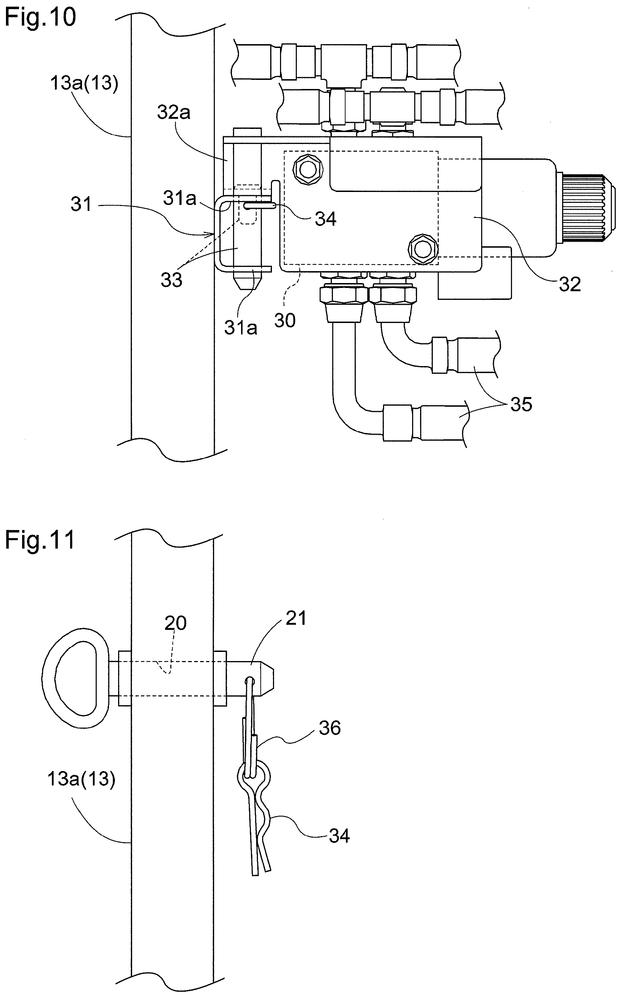

As illustrated in Fig. 10, the riding type mower A includes an operation valve device 30 detachably supported by the right supportive column portion 13a of the support frame 13 and configured to operate the left and right lifting-lowering cylinders 26 and the left and right dump cylinders 15.

Specifically, as illustrated in Fig. 10, the right supportive column portion 13a is provided with an operation valve supporting section 31 having a pair of upper and lower supportive elements 31a. The operation valve device 30 is provided with an attachment section 32, which has a lateral side portion 32a provided with two connection shafts 33 extending downward from front and back portions thereof, respectively. The attachment section 32 is supported by the operation valve supporting section 31 with (i) the front and back connection shafts 33 inserted through two support holes in each of the upper and lower supportive elements 31a from above in such a manner as to be capable of being pulled out and (ii) the lateral side portion 32a placed on and received by the upper face of the upper supportive element 31a. The front connection shaft 33 is provided with a beta pin 34 detachably attached to a portion of the front connection shaft 33 which portion is between the upper and lower supportive elements 31a. The beta pin 34 prevents the attachment section 32 from becoming detached from the operation valve supporting section 31.

When the grass collecting apparatus 10 is to be detached from the vehicle body through detachment of hydraulic hoses 35 provided for the vehicle body from the operation valve device 30, the beta pin 34 is detached from the front connection shaft 33 to allow the front and back connection shafts 33 to be pulled out from the upper and lower supportive elements 31a for detachment of the operation valve device 30 from the support frame 13. In this case, the beta pin 34 detached from the front connection shaft 33 may, as illustrated in Fig. 11, be hung for storage on a ring-shaped pin holder 36 provided for the right supportive column portion 13a. The pin holder 36 is detachably supported by a portion of one of the two connection pins 21 for the right supportive column portion 13a which portion protrudes inward from the right supportive column portion 13a. The pin holder 36 is supported by the connection pin 21 to be provided for the right supportive column portion 13a.

### [Configuration of Support Cart]

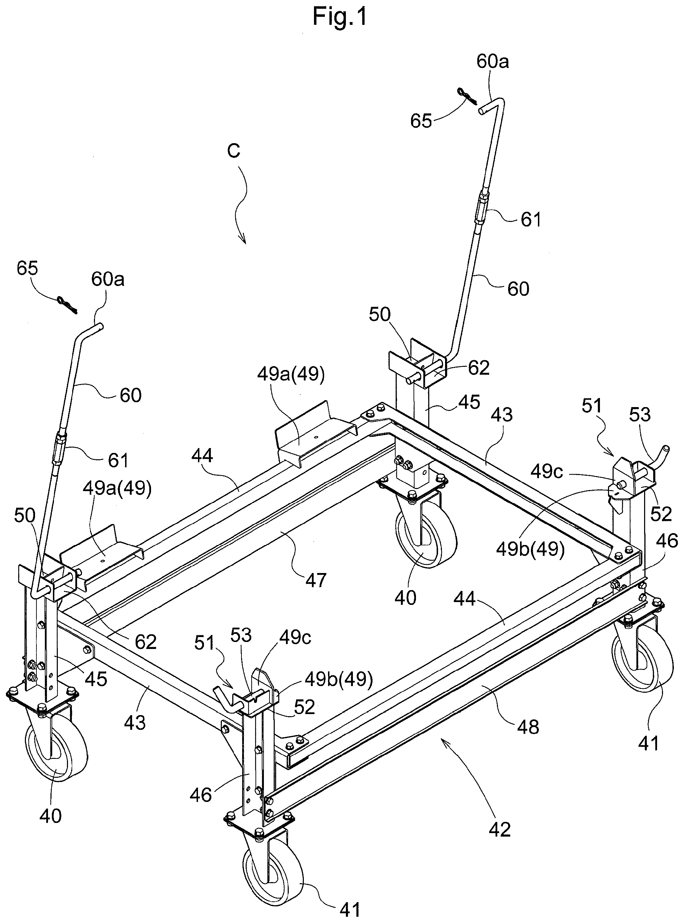

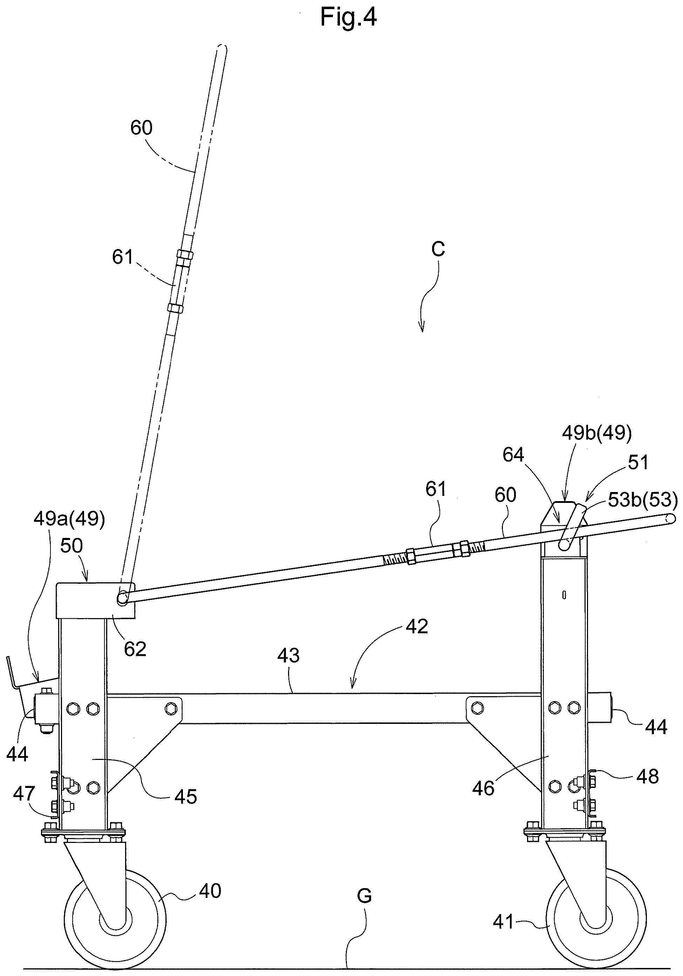

Fig. 1 illustrates a support cart C including a base section 42, a pair of left and right front wheels 40 provided for the base section 42, and a pair of left and right rear wheels 41 provided for the base section 42. The front wheels 40 and the rear wheels 41 are each a caster wheel. The base section 42 is movable over a work floor G such as the ground (see Fig. 4) with use of the front wheels 40 and the rear wheels 41.

The base section 42 includes a pair of left and right front-back frame bars 43 and a pair of front and back lateral frame bars 44, the front-back frame bars 43 and the lateral frame bars 44 being combined with each other into a frame in a plan view. The left and right front-back frame bars 43 each have a front portion provided with a front-wheel supporting frame bar 45 extending in the up-down direction of the base section 42. The left and right front-back frame bars 43 each have a back portion provided with a rear-wheel supporting frame bar 46 extending in the up-down direction of the base section 42. The base section 42 has an inner space defined by the pair of left and right front-back frame bars 43 and the pair of front and back lateral frame bars 44. The base section 42 is thus lightweight. The base section 42 for the present embodiment is in the shape of a rectangular frame in a plan view. The shape is, however, not limited to that. The base section 42 may alternatively be in the shape of a frame that is, for example, hexagonal or elliptical instead of rectangular.

The front wheels 40 are each supported by a lower portion of the corresponding front-wheel supporting frame bar 45. The rear wheels 41 are each supported by a lower portion of the corresponding rear-wheel supporting frame bar 46. The left and right front-wheel supporting frame bars 45 are connected to each other by a front reinforcement frame bar 47 extending therebetween. The left and right rear-wheel supporting frame bars 46 are connected to each other by a rear reinforcement frame bar 48 extending therebetween.

As illustrated in Fig. 1, the base section 42 has an upper portion provided with a placement section 49 on which the grass collecting apparatus 10 is placed and by which the grass collecting apparatus 10 is supported. Specifically, the placement section 49 includes (i) a pair of left and right front container placement portions 49a provided for the front lateral frame bar 44 and (ii) back container placement portions 49b each provided for an upper portion of the corresponding one of the left and right rear-wheel supporting frame bars 46. The left and right back container placement portions 49b are, as illustrated in Fig. 4, above the left and right front container placement portions 49a. The left and right front-wheel supporting frame bars 45 each have an upper portion provided with a cylinder holding section 50 holding a lower portion of the corresponding lifting-lowering cylinder 26.

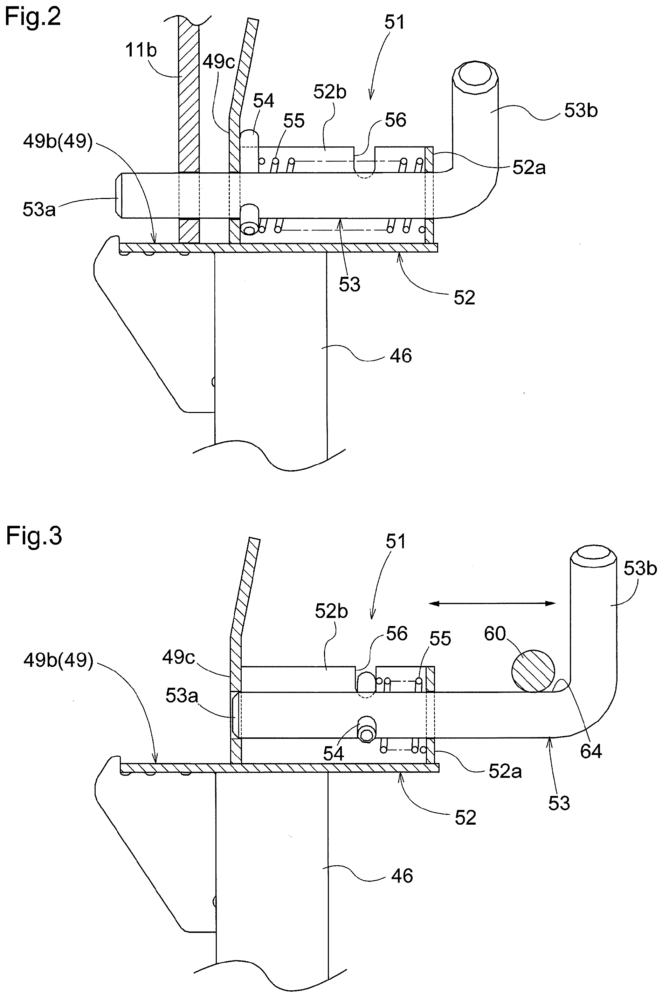

As illustrated in Fig. 1, the base section 42 has a left side portion and a right side portion each provided with a lock mechanism 51 configured to fix the grass collecting apparatus 10 on the placement section 49 to the base section 42. Specifically, as illustrated in Fig. 1, the left lock mechanism 51 is provided for the left back container placement portion 49b, whereas the right lock mechanism 51 is provided for the right back container placement portion 49b. As illustrated in Fig. 2, the left and right lock mechanisms 51 each include (i) a holder 52 extending from the corresponding back container placement portion 49b laterally outward of the base section and (ii) a lock member 53 supported in a support hole in a lateral plate portion 52a of the holder 52 and a support hole in a lateral wall portion 49c of the back container placement portion 49b. The lock member 53 is supported in such a manner as to be slidable in the width direction of the base section. The lock member 53 is provided with a lock spring 55 fitted around a portion thereof which portion is between (i) a spring receiving pin 54 provided for the lock member 53 and (ii) the lateral plate portion 52a of the holder 52.

The left and right lock mechanisms 51 are each configured as follows: As illustrated in Fig. 2, when the lock member 53 has been slid by the urging force of the lock spring 55 inward of the base section so that the tip 53a of the lock member 53 has been inserted through a lock hole in the link connection portion 11b of the grass collecting container 11, the lock member 53 fixes the grass collecting apparatus 10 to the base section 42 (locked state). As illustrated in Fig. 3, when the lock member 53 has been slid against the urging force of the lock spring 55 through operation of the operation portion 53b at an end of the lock member 53 so that the tip 53a of the lock member 53 has been pulled out from the lock hole in the link connection portion 11b, the lock member 53 releases the grass collecting apparatus 10 from the base section 42 (released state). When the lock member 53 is in the released state, rotating the lock member 53 with use of the operation portion 53b and hooking the tip of the spring receiving pin 54 on a notch 56 (positioning portion) in a back plate portion 52b of the holder 52 allows the lock member 53 to be kept in the released state against the urging force of the lock spring 55.

### [Configuration of Strut Poles]

As illustrated in Fig. 1, the base section 42 is provided with two strut poles 60 configured to prop the lifting-lowering link mechanism 12. One of the strut poles 60 is present at a front left portion of the base section 42, whereas the other of the strut poles 60 is present at a front right portion of the base section 42. The left strut pole 60 extends from a support section 62 at an upper portion of the left front-wheel supporting frame bar 45, whereas the right strut pole 60 extends from a support section 62 at an upper portion of the right front-wheel supporting frame bar 45. The left and right strut poles 60 each include an extension and contraction adjusting portion 61. The extension and contraction adjusting portion 61 is configured to adjust the length of that portion of the corresponding strut pole 60 which extends from the position at which the strut pole 60 is connected to the corresponding support section 62 to a connection portion 60a at the tip of the strut pole 60. The extension and contraction adjusting portions 61 for the present embodiment are each present at an intermediate portion of the corresponding strut pole 60. The arrangement is, however, not limited to that. The extension and contraction adjusting portions 61 may, for instance, alternatively be each present at a base end of the corresponding strut pole 60 and integral with a portion for connection to the corresponding support section 62. The extension and contraction adjusting portions 61 may further alternatively be each present at an extension end of the corresponding strut pole 60 and integral with the corresponding connection portion 60a. The extension and contraction adjusting portions 61 are each in the form of a turnbuckle.

The left and right strut poles 60 are each supported by the corresponding support section 62 in such a manner as to be capable of being swung in the up-down direction relative to the corresponding front-wheel supporting frame bar 45. Further, the left and right strut poles 60 are each supported in such a manner as to be capable of changing its orientation between (i) a strut orientation, in which the strut pole 60 extends upward from the corresponding support section 62 as illustrated in Fig. 1, and (ii) a storage orientation, in which the strut pole 60 is inclined flat backward in comparison to the strut orientation as shown in Fig. 4 with solid lines.

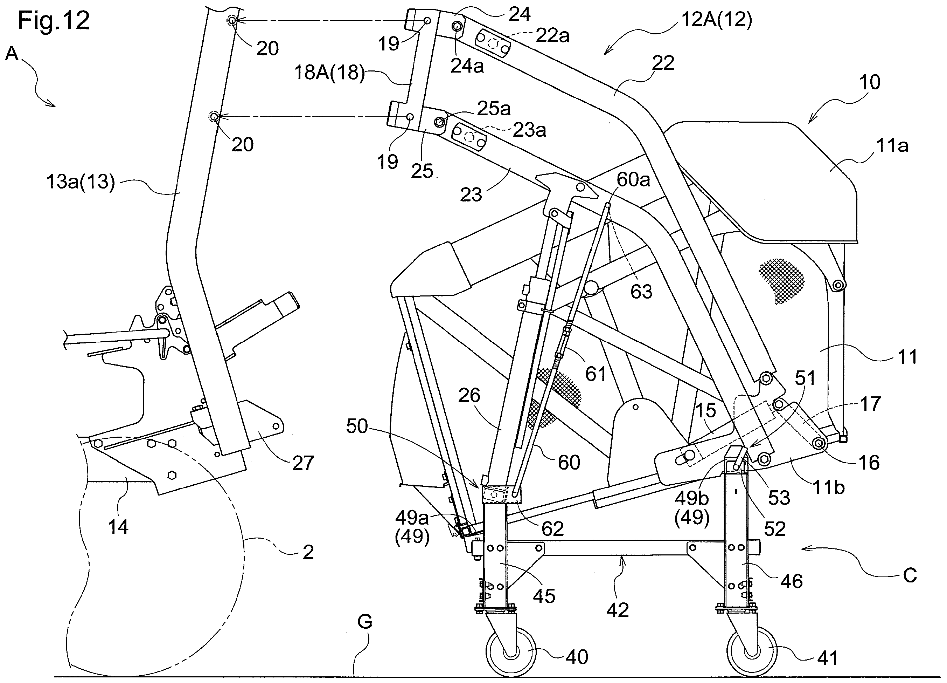

When the left and right strut poles 60 are each in the strut orientation as illustrated in Fig. 12, the strut pole 60 has its tip detachably connected to the corresponding link mechanism portion 12A of the lifting-lowering link mechanism 12 by means of the corresponding connection portion 60a in such a manner as to prop the lifting-lowering link mechanism 12. The connection portion 60a is connected to the link mechanism portion 12A as a result of the connection portion 60a being hooked in a connection hole 63 in the lower link 23 of the link mechanism portion 12A. The connection portion 60a hooked in the connection hole 63 is prevented from becoming pulled out through attachment of a beta pin 65 (see Fig. 1) serving as a member for prevention of being pulled out. The connection portion 60a includes a bent tip of the strut pole 60. The length of each strut pole 60 is adjusted with use of the corresponding extension and contraction adjusting portion 61 so that the lifting-lowering link mechanism 12 is swung to be adjusted relative to the grass collecting container 11. This allows the connection section 18 of the lifting-lowering link mechanism 12 to be at the same height as that portion of the support frame 13 to which the connection section 18 is to be connected.

When the strut poles 60 are each in the storage orientation as illustrated in Fig. 3 and shown in Fig. 4 with solid lines, the strut pole 60 has a tip-side portion hooked by a holding portion 64 of the lock member 53 of the corresponding lock mechanism 51 in the released state, so that the strut pole 60 is held by the lock mechanism 51 in the storage orientation. The holding portion 64 of the lock member 53 includes (i) a base end side portion, which is a portion of the lock member 53 which portion is present further outward of the base section than the corresponding holder 52 and (ii) an operation portion 53b bent relative to the base end side portion. The base end side portion is configured to receive the corresponding strut pole 60 from below, whereas the operation portion 53b functions as a stopper configured to prevent the strut pole 60 from becoming detached from the base end side portion.

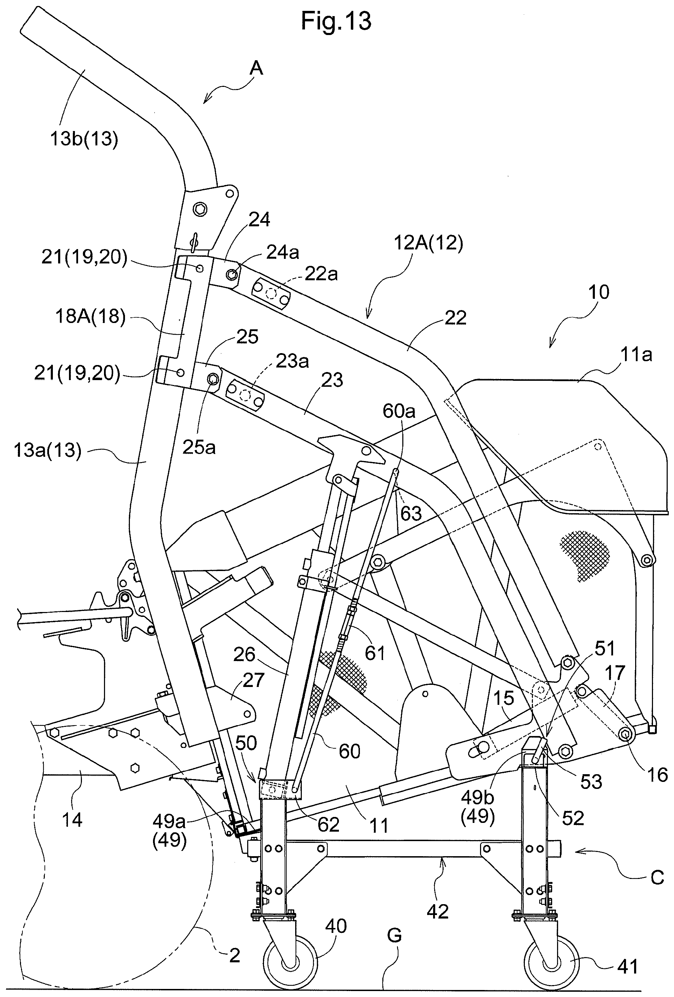

The grass collecting apparatus 10 can be attached to the vehicle body with use of the support cart C as follows:
As illustrated in Fig. 12, the support cart C is placed on a work floor G such as the ground. The grass collecting apparatus 10 is placed on the placement section 49. The left and right lock mechanisms 51 are then operated into the locked state so that the grass collecting apparatus 10 is fixed to the base section 42 with use of the respective lock members 53 of the left and right lock mechanisms 51. Next, the left and right strut poles 60 are each operated into the strut orientation to prop the lifting-lowering link mechanism 12. The respective lengths of the left and right strut poles 60 are each adjusted with use of the corresponding extension and contraction adjusting portion 61 so that the lifting-lowering link mechanism 12 is swung to be adjusted relative to the grass collecting container 11 and that the connection section 18 of the lifting-lowering link mechanism 12 is at the same height as that portion of the support frame 13 to which the connection section 18 is to be connected. The turnbuckle produces a jack function based on its screw threads, so that the corresponding link mechanism portion 12A is easily lifted and lowered regardless of the load of the link mechanism portion 12A.
Next, as illustrated in Fig. 13, the support cart C is moved from behind the vehicle body toward the vehicle body. The connection section 18 becomes engaged with the support frame 13, while the left and right lifting-lowering cylinders 26 each have a lower portion held by the corresponding cylinder holding section 50. When the connection section 18 has engaged with the support frame 13, the upper and lower connection pins 21 are inserted through the connection section 18 and the support frame 13, so that the connection section 18 is connected to the support frame 13.

Next, the left and right strut poles 60 are each detached from the corresponding link mechanism portion 12A. The respective lower portions of the lifting-lowering cylinders 26 are each detached from the corresponding cylinder holding section 50, and are each connected to the corresponding cylinder supporting section 27 of the support frame 13 so that the lifting-lowering cylinders 26 are supported by the support frame 13. If the operation valve device 30 is unattached, the attachment section 32 of the operation valve device 30 is attached to the operation valve supporting section 31 so that the operation valve device 30 is supported by the support frame 13. The operation valve device 30 is then connected to the hydraulic hoses 35 provided for the vehicle body.

The grass collecting apparatus 10 can be detached from the vehicle body through a process opposite to that of the attachment of the grass collecting apparatus 10.

Specifically, when the lifting-lowering link mechanism 12 is to be detached from the support frame 13, the respective lengths of the strut poles 60 are each adjusted with use of the corresponding extension and contraction adjusting portion 61 so that the connection portion 60a of the strut pole 60 coincides with the connection hole 63 of the corresponding lower link 23. The strut poles 60 are then each connected to the corresponding link mechanism portion 12A. This allows the lifting-lowering link mechanism 12 to be supported by the strut poles 60 even if the upper and lower connection pins 21 are pulled out.

### [Alternative Embodiments]

(1) The embodiment described above is an example including left and right strut poles 60. The embodiment may alternatively include only either a left or right strut pole 60. Specifically, the embodiment may be arranged as follows: The left and right upper links 22 are connected to each other with use of an upper connection member 22a (see Fig. 6). The left and right lower links 23 are connected to each other with use of a lower connection member 23a (see Fig. 6). Propping only either the left or right link mechanism portion 12A with use of a single strut pole 60 allows the entire lifting-lowering link mechanism 12 to be propped.
(2) The embodiment described above is an example in which the connection section 18 is provided with upper support sections 24 and lower support sections 25 and in which the strut poles 60 are each connected to only the corresponding lower link 23. The arrangement is, however, not limited to that. The embodiment may, for instance, alternatively include a connection section provided with an upper support section 24 and a connection section provided with a lower support section 25 for each supportive column portion 13a, the connection sections being separately connected to the support frame 13, and further include strut poles configured to prop the upper links 22 and the lower links 23 separately from each other.
(3) The embodiment described above is an example in which the extension and contraction adjusting portions 61 are each in the form of a turnbuckle. The arrangement is, however, not limited to that. The extension and contraction adjusting portions 61 may alternatively be each in the form of, for example, an extension and contraction element that combines a slide structure and a positioning screw or an extension and contraction element that combines a slide structure and a positioning pin.
(4) The embodiment described above is an example in which the lock members 53 each include a holding portion 64. The arrangement is, however, not limited to that. The embodiment may, for instance, alternatively include dedicated holding structures each configured to hold a tip-side portion of the corresponding strut pole 60 in the storage orientation.

### Industrial Applicability

The present invention is applicable to a support cart for a riding type mower, the riding type mower including a mowing apparatus provided for the vehicle body and a grass collecting apparatus configured to be detachably supported by a support section at a back portion of the vehicle body, the grass collecting apparatus including (i) a grass collecting container, (ii) a connection section configured to be detachably connected to the support section, and (iii) a lifting-lowering link mechanism extending backward from the connection section in such a manner as to be capable of being swung in the up-down direction and supporting the grass collecting container in such a manner as to be capable of lifting and lowering the grass collecting container and changing the orientation of the grass collecting container between a grass collecting orientation and a discharge orientation.

### Reference Signs List

- 8: Mowing apparatus
- 10: Grass collecting apparatus
- 11: Grass collecting container
- 12: Lifting-lowering link mechanism
- 13: Support section (support frame)
- 18: Connection section
- 22: Upper link
- 23: Lower link
- 24: Upper support section
- 25: Lower support section
- 42: Base section
- 49: Placement section
- 53: Lock member
- 60: Strut pole
- 61: Extension and contraction adjusting portion
- 64: Holding portion
- A: Riding type mower
- G: Work floor

## Claims

1. A riding type mower including:
a vehicle body;
a mowing apparatus (8) provided for the vehicle body;
a support section (13) at a back portion of the vehicle body;
a grass collecting apparatus (10) configured to be detachably supported by the support section,
the grass collecting apparatus including:
a grass collecting container (11) configured to receive grass mown by the mowing apparatus and store the grass;
a connection section (18) configured to be detachably connected to the supporting portion; and
a lifting-lowering link mechanism (12) extending backward from the connection section in such a manner as to be capable of being swung in an up-down direction and supporting the grass collecting container (11) in such a manner as to be capable of (i) lifting and lowering the grass collecting container and (ii) changing an orientation of the grass collecting container between a grass collecting orientation and a discharge orientation; and
a support cart (C) for use in attaching the grass collecting apparatus to the riding type mower and detaching the grass collecting apparatus from the riding type mower,
the support cart (C) comprising:
a base section (42) configured to move on a work floor; and
a placement section (49) provided for the base section and configured to receive and support the grass collecting apparatus;
**characterized in that**
the support cart (C) further comprises a strut pole (60) extending upward from the base section and configured to be switched between (i) a strut orientation, in which the strut pole props the lifting-lowering link mechanism, and (ii) a non-strut orientation, in which the strut pole does not prop the lifting-lowering link mechanism, and
the strut pole (60) includes an extension and contraction adjusting portion (61).

2. The riding type mower according to claim 1, wherein
the lifting-lowering link mechanism (12) includes an upper link (22) and a lower link (23),
the connection section (18) is provided with (i) an upper support section (24) connected to the connection section and pivotally supporting a front end of the upper link and (ii) a lower support section (25) connected to the connection section and pivotally supporting a front end of the lower link, and
the strut pole (60) is connected only to the lower link of the upper link and the lower link.

3. The riding type mower according to claim 1 or 2, wherein
the extension and contraction adjusting portion (61) includes a turnbuckle.

4. The riding type mower according to any one of claims 1 to 3, further comprising:
a lock member (53) configured to be switched between (i) a locked state, in which the lock member fixes the grass collecting apparatus (10) on the placement section to the base section (42), and (ii) a released state, in which the lock member does not fix the grass collecting apparatus to the base section, wherein
the lock member (53) is supported by the base section in such a manner as to be capable of being slid between the locked state and the released state.

5. The riding type mower according to claim 4, wherein
the strut pole (60) is configured to be switched into a storage orientation, in which the strut pole is inclined flat in comparison to the strut orientation, and
the lock member (53) includes a holding portion (64) configured to hook a tip-side portion of the strut pole in the storage orientation to hold the strut pole in the storage orientation.

## Patentansprüche

1. Aufsitzmäher, der Folgendes beinhaltet:
eine Fahrzeugkarosserie;
eine Mähvorrichtung (8), die für die Fahrzeugkarosserie bereitgestellt ist;
einen Trägerbereich (13) an einem hinteren Abschnitt der Fahrzeugkarosserie;
eine Grasauffangvorrichtung (10), die konfiguriert ist, um abnehmbar von dem Trägerabschnitt getragen zu werden,
wobei die Grasauffangvorrichtung Folgendes beinhaltet:
einen Grasauffangbehälter (11), der konfiguriert ist, um von der Mähvorrichtung gemähtes Gras aufzunehmen und das Gras zu speichern;
einen Verbindungsabschnitt (18), der konfiguriert ist, um lösbar mit dem Stützabschnitt verbunden zu sein; und
einen Hebe-Absenk-Verbindungsmechanismus (12), der sich von dem Verbindungsabschnitt nach hinten erstreckt, um in der Lage zu sein, in einer Auf-Ab-Richtung geschwenkt zu werden und den Grasauffangbehälter (11) auf eine Weise trägt, um in der Lage zu sein, (i) den Grasauffangbehälter anzuheben und abzusenken und (ii) eine Ausrichtung des Grasauffangbehälters zwischen einer Grasauffangausrichtung und einer Entladeausrichtung zu ändern; und
einen Trägerwagen (C) zur Verwendung beim Anbringen der Grasauffangvorrichtung an dem Aufsitzmäher und beim Abnehmen der Grasauffangvorrichtung von dem Aufsitzmäher,
der Trägerwagen (C) umfassend:
einen Basisbereich (42), der konfiguriert ist, um sich auf einem Arbeitsboden zu bewegen; und
einen Aufstellbereich (49), der für den Basisbereich bereitgestellt und konfiguriert ist, um die Grasauffangvorrichtung aufzunehmen und zu tragen;
**dadurch gekennzeichnet, dass**
der Trägerwagen (C) ferner eine Strebenstange (60) umfasst, die sich von dem Basisbereich nach oben erstreckt und konfiguriert ist, um zwischen (i) einer Strebenausrichtung, in der die Strebenstange den Hebe-Absenk-Verbindungsmechanismus stützt, und (ii) einer Nicht-Strebenausrichtung, in der die Strebenstange den Hebe-Absenk-Verbindungsmechanismus nicht stützt, umgeschaltet zu werden, und
wobei die Strebenstange (60) einen Ausfahr- und Einzieh-Einstellabschnitt (61) beinhaltet.

2. Aufsitzmäher nach Anspruch 1, wobei
der Hebe-Absenk-Verbindungsmechanismus (12) ein oberes Verbindungsstück (22) und ein unteres Verbindungsstück (23) beinhaltet,
der Verbindungsbereich (18) versehen ist mit (i) einem oberen Trägerbereich (24), der mit dem Verbindungsbereich verbunden ist und ein vorderes Ende des oberen Verbindungsstücks schwenkbar trägt, und (ii) einem unteren Trägerbereich (25), der mit dem Verbindungsbereich verbunden ist und ein vorderes Ende des unteren Verbindungsstücks schwenkbar trägt, und
die Strebenstange (60) nur mit dem unteren Verbindungsstück des oberen Verbindungsstücks und es unteren Verbindungsstück verbunden ist.

3. Aufsitzmäher nach Anspruch 1 oder 2, wobei
der Ausfahr- und Einzieh-Einstellabschnitt (61) ein Spannschloss beinhaltet.

4. Aufsitzmäher nach einem der Ansprüche 1 bis 3, ferner umfassend:
ein Verriegelungselement (53), das konfiguriert ist, um zwischen (i) einem verriegelten Zustand, in dem das Verriegelungselement die Grasauffangvorrichtung (10) auf dem Aufstellbereich an dem Basisbereich (42) fixiert, und (ii) einem gelösten Zustand, in dem das Verriegelungselement die Grasauffangvorrichtung nicht an dem Basisbereich fixiert, umgeschaltet zu werden, wobei
das Verriegelungselement (53) auf eine Weise von dem Basisteil getragen wird, um in der Lage zu sein, zwischen dem verriegelten Zustand und dem freigegebenen Zustand verschoben zu werden.

5. Aufsitzmäher nach Anspruch 4, wobei
die Strebenstange (60) konfiguriert ist, um in eine Lagerungsausrichtung umgeschaltet zu werden, in der die Strebenstange im Vergleich zur Strebenausrichtung flach geneigt ist, und
das Verriegelungselement (53) einen Halteabschnitt (64) umfasst, der konfiguriert ist, um einen spitzenseitigen Abschnitt der Strebenstange in der Lagerungsausrichtung einzuhaken, um die Strebenstange in der Lagerungsausrichtung zu halten.

## Revendications

1. Tondeuse autoportée comprenant :
un corps de véhicule ;
un appareil de tonte (8) prévu pour le corps de véhicule ;
une section de support (13) au niveau d'une partie arrière du corps de véhicule ;
un appareil de collecte d'herbe (10) configuré pour être supporté, de manière détachable, par la section de support,
l'appareil de collecte d'herbe comprenant :
un récipient de collecte d'herbe (11) configuré pour recevoir l'herbe tondue par l'appareil de tonte et pour stocker l'herbe ;
une section de raccordement (18) configurée pour être raccordée, de manière détachable, à la partie de support ; et
un mécanisme de liaison de levage - abaissement (12) s'étendant vers l'arrière à partir de la section de raccordement afin de pouvoir être basculé dans une direction de haut en bas et supportant le récipient de collecte d'herbe (11) afin de pouvoir (i) lever et abaisser le récipient de collecte d'herbe et (ii) modifier une orientation du récipient de collecte d'herbe entre une orientation de collecte d'herbe et une orientation de décharge ; et
un chariot de support (C) destiné à être utilisé pour fixer l'appareil de collecte d'herbe à la tondeuse autoportée et détacher l'appareil de collecte d'herbe de la tondeuse autoportée,
le chariot de support (C) comprenant :
une section de base (42) configurée pour se déplacer sur un sol de travail ; et
une section de mise en place (49) prévue pour la section de base et configurée pour recevoir et supporter l'appareil de collecte d'herbe ;
**caractérisée en ce que** :
le chariot de support (C) comprend en outre un pilier d'entretoise (60) s'étendant vers le haut à partir de la section de base et configuré pour être commuté entre (i) une orientation d'entretoise, dans laquelle le pilier d'entretoise soutient le mécanisme de liaison de levage - abaissement, et (ii) une orientation sans entretoise, dans laquelle le pilier d'entretoise ne soutient pas le mécanisme de liaison de levage - abaissement, et
le pilier d'entretoise (60) comprend une partie de réglage d'extension et de contraction (61).

2. Tondeuse autoportée selon la revendication 1, dans laquelle :
le mécanisme de liaison de levage - abaissement (12) comprend une liaison supérieure (22) et une liaison inférieure (23),
la section de raccordement (18) est prévue avec (i) une section de support supérieure (24) raccordée à la section de raccordement et supportant, de manière pivotante, une extrémité avant de la liaison supérieure et (ii) une section de support inférieure (25) raccordée à la section de raccordement et supportant, de manière pivotante, une extrémité avant de la liaison inférieure, et
le pilier d'entretoise (60) est raccordé uniquement à la liaison inférieure de la liaison supérieure et de la liaison inférieure.

3. Tondeuse autoportée selon la revendication 1 ou 2, dans laquelle :
la partie de réglage d'extension et de contraction (61) comprend un tendeur.

4. Tondeuse autoportée selon l'une quelconque des revendications 1 à 3, comprenant en outre :
un élément de verrouillage (53) configuré pour être commuté entre (i) un état verrouillé, dans lequel l'élément de verrouillage fixe l'appareil de collecte d'herbe (10), sur la section de mise en place, à la section de base (42) et (ii) un état libéré, dans lequel l'élément de verrouillage ne fixe pas l'appareil de collecte d'herbe à la section de base, dans laquelle :
l'élément de verrouillage (53) est supporté par la section de base de sorte qu'il peut être coulissé entre l'état verrouillé et l'état libéré.

5. Tondeuse autoportée selon la revendication 4, dans laquelle :
le pilier d'entretoise (60) est configuré pour être commuté dans une orientation de stockage, dans laquelle le pilier d'entretoise est incliné à plat par rapport à l'orientation d'entretoise, et
l'élément de verrouillage (53) comprend une partie de support (64) configurée pour accrocher une partie du côté de la pointe du pilier d'entretoise dans l'orientation de stockage afin de maintenir le pilier d'entretoise dans l'orientation de stockage.
